# EUROPEAN PATENT APPLICATION

(11) **EP 2 203 012 A1**
(43) Date of publication of application: **30.06.2010**
(21) Application number: 08840414.0
(22) Date of filing: 14.10.2008
(51) Int. Cl.: H04W 16/26, H04B 1/38, H04B 7/15, H04M 1/02, H04M 1/04, H04M 1/738, H04W 88/00, H04W 92/08

(54) **RADIO COMMUNICATION DEVICE, CRADLE DEVICE, AND RELAY TRANSMISSION METHOD**

(30) Priority: 15.10.2007 JP 2007268104
(71) Applicant: Panasonic Corporation, Kadoma-shi Osaka 571-8501 (JP)
(72) Inventor: MIYOSHI, Kenichi c/o Panasonic Corporation, IPROC, 2-1-61, Shiromi, Chuo-ku, Osaka 540-6207 (JP); ARAMAKI, Takashi c/o Panasonic Corporation, IPROC, 2-1-61, Shiromi, Chuo-ku, Osaka 540-6207 (JP); KOBAYAKAWA, Yuichi c/o Panasonic Corporation, IPROC, 2-1-61, Shiromi, Chuo-ku, Osaka 540-6207 (JP); SUZUKI, Hidetoshi c/o Panasonic Corporation, IPROC, 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2008/002901
(87) International publication number: WO 2009/050879

(57) **Abstract**

Provided is a radio communication device which can increase a relay performance of a mobile station. In this device, a connection unit (108) performs connection between the local station and a cradle by connecting a connection unit of the cradle. A connection detection unit (109) detects connection between the local station and the cradle and outputs to a relay processing control unit (110), a signal indicating that the connection with the cradle has been detected. If a signal indicating that connection with the cradle has been detected is inputted from the connection detection unit (109), the relay processing control unit (110) outputs a control signal to a relay processing unit (112), a switch (111), and a switch (113) so as to execute a relay process on the signal transferred from the cradle and transmit the obtained signal to the cradle.

## Description

### Technical Field

The present invention relates to a radio communication apparatus, a cradle apparatus and a relay transmission method.

### Background Art

In recent years, along with the multimediatization of information in cellular mobile communication systems, transmitting high capacity data such as still images and movies in addition to speech data has been popularized. In order to realize the transmission of high capacity data, a technique to realize a high transmission rate using a high-frequency radio band is being studied actively.

However, when a high-frequency radio band is used, although a high transmission rate can be expected in a short distance, attenuation due to the transmission distance becomes greater as the distance increases. Accordingly, when a mobile communication system employing a high-frequency radio band is actually operated, the coverage area of each base station apparatus becomes small. As a result of this, it is necessary to set up a larger number of base stations. Since the set-up of base stations involves deserved costs, there is a strong demand for a technique to realize communication services which utilize a high-frequency radio band and prevent an increase in the number of base stations.

To address this demand, relay techniques to set up relay stations between a mobile station and a base station and perform communication between the mobile station and the base station via the relay stations are being studied. One of such relay techniques is a technique to make a mobile station be a relay station to relay signals from another mobile station (e.g., see Patent Document 1). According to this prior art, when the mobile station receives a relay request signal from another mobile station, the mobile station performs relay transmission between another mobile station and the base station.
Patent Document 1: International Publication No. WO 2003/015445 Pamphlet

### Disclosure of Invention

### Problems to be Solved by the Invention

However, mobile stations are required to be designed small as much as possible in consideration of mobility, so that the circuit scale which can be provided in a mobile station is limited. Therefore, in a mobile station, a circuit equivalent to a relay station fixedly installed cannot be mounted. Accordingly, when a mobile station relays a signal from another mobile station as the above-described prior art, the relay performance is poorer than that of the relay station fixedly installed.

It is therefore an object of the present invention to provide a radio communication apparatus, a cradle apparatus and a relay transmission method which can improve the relay performance of a mobile station.

### Means for Solving the Problem

The radio communication apparatus according to the present invention has a configuration including: a connecting section that performs a connection the radio communication apparatus to a cradle apparatus; a detecting section that detect the connection; and a relay processing section that performs relay processing of a signal transferred from the cradle apparatus and transmits the processed signal to the cradle apparatus, when the detecting section detects the connection.

### Advantageous Effects of Invention

According to the present invention, the relay performance of a mobile station can be improved.

### Brief Description of Drawings

FIG.1 is a block diagram showing a configuration of a mobile station according to embodiment 1 of the present invention;
FIG.2 is a block diagram showing a configuration of a cradle according to embodiment 1 of the present invention; and
FIG.3 is a block diagram showing a configuration of a mobile station according to embodiment 2 of the present invention.

### Best Mode for Carrying Out the Invention

Hereinafter, embodiments of the present invention will be described in detail with reference to the accompanying drawings. Here, a mobile station is connected to a cradle that supplies power and so forth for charging.

### (Embodiment 1)

In the present embodiment, when a mobile station detects connection between the mobile station and the cradle, the mobile station performs relay processing of the signal transferred from the cradle and transmits the processed signal to the cradle.

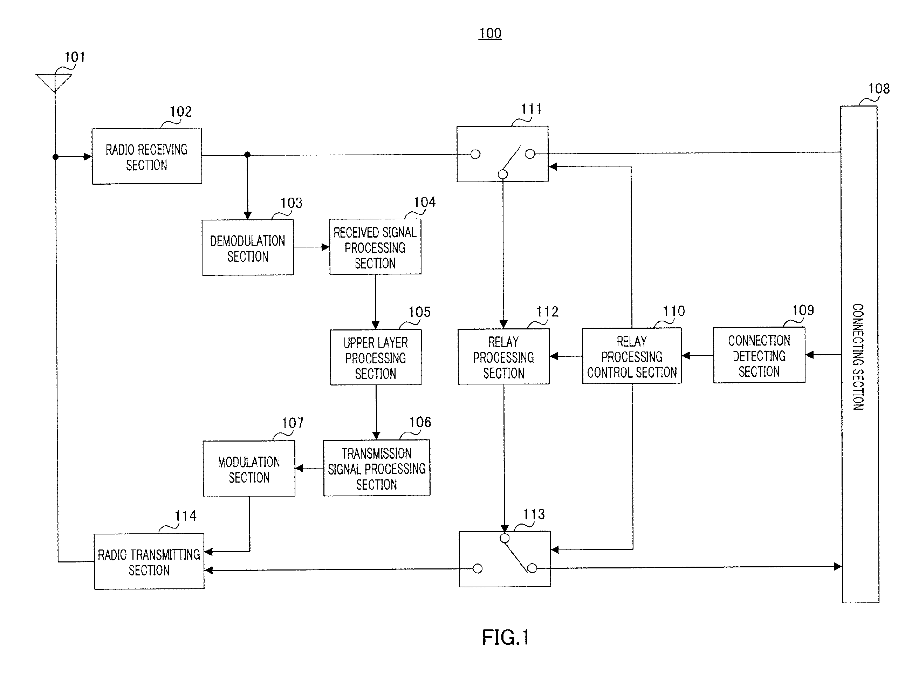

FIG.1 shows mobile station 100 according to the present embodiment.

In mobile station 100, radio receiving section 102 performs reception processing, such as down-conversion, A/D conversion and so forth, of the signal received via antenna 101. When the received signal is a signal directed to mobile station 100, radio receiving section 102 outputs the signal to demodulation section 103, or when the received signal is a relay signal from another mobile station or a relay signal from the base station, radio receiving section 102 outputs the relay signal to switch 111.

Demodulation section 103 performs demodulation processing of the signal directed to mobile station 100 inputted from radio receiving section 102. Demodulation section 103 then outputs the demodulated signal to received signal processing section 104.

Received signal processing section 104 performs received signal processing of the demodulated signal inputted from demodulation section 103 to extract data channel information. Received signal processing section 104 then outputs the data after the received signal processing to upper layer processing section 105.

Upper layer processing section 105 performs processing in the upper layer, such as speech signal processing, image processing, multimedia signal processing and so forth, using the data after the received signal processing inputted from received signal processing section 104. Upper layer processing section 105 then outputs the signal after the upper layer processing to transmission signal processing section 106.

Transmission signal processing section 106 performs transmission signal processing, including forming the signal inputted from upper layer processing section 105 into data channel information for the base station, which is the destination of the transmission, and adding a control channel. Transmission signal processing section 106 then outputs the signal after the transmission signal processing to modulation section 107.

Modulation section 107 modulates the signal inputted from transmission signal processing section 106. Modulation section 107 then outputs the modulated signal to radio transmitting section 114.

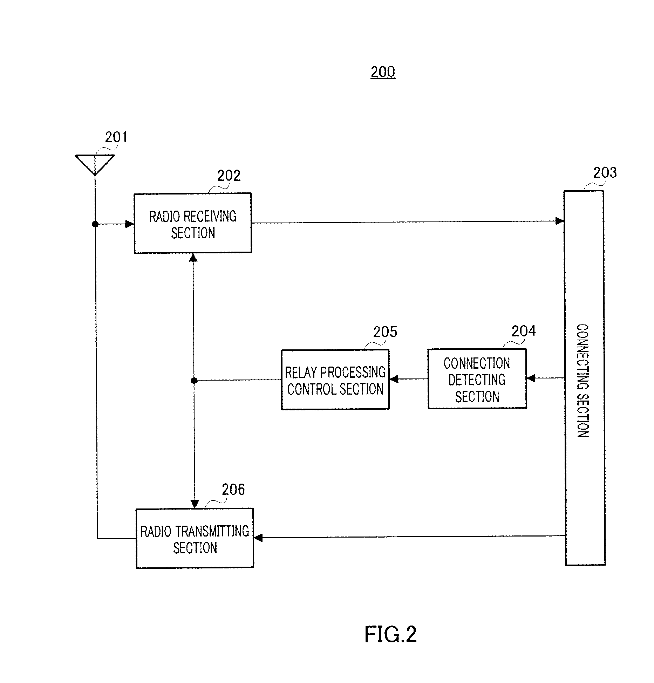

Meanwhile, connecting section 108 connects mobile station 100 and cradle 200 (described later) by connecting with connecting section 203 (FIG.2) of cradle 200. By this means, mobile station 100 receives the signal transferred from cradle 200 via connecting section 108 and transmits the relay signal to which the relay processing has been applied in relay processing section 112, to cradle 200.

Connection detecting section 109 detects the connection between mobile station 100 and cradle 200. That is, connection detecting section 109 detects whether or not connecting section 108 is connected with connecting section 203 (FIG.2) of cradle 200. Then, when detecting connection between mobile station 100 and cradle 200, connection detecting section 109 outputs a signal indicating that connection is detected between mobile station 100 and cradle 200, to relay processing control section 110.

When the signal indicating that connection is detected between mobile station 100 and cradle 200 is received from connection detecting section 109 as input, relay processing control section 110 outputs, to relay processing section 112, switch 111 and switch 113, a control signal that commands to perform relay processing of the signal transferred from cradle 200 and to transmit the processed signal to cradle 200. To be more specific, relay processing control section 110 controls relay processing section 112 to be turned on and also controls switch 111 and switch 113 to connect to connecting section 108.

Switch 111 switches between the connection with radio receiving section 102 and the connection with connecting section 108 in accordance with the control signal from relay processing control section 110, and therefore outputs the relay signal inputted from radio receiving section 102 or the relay signal inputted from connecting section 108 to relay processing section 112. To be more specific, when a control signal is received from relay processing control section 110 as input, switch 111 outputs the relay signal received from connecting section 108 as input by connecting with connecting section 108. Meanwhile, when a control signal is not received from relay processing control section 110 as input, switch 111 outputs the relay signal received from radio receiving section 102 as input by connecting with radio receiving section 102.

Relay processing section 112 performs relay processing of the relay signal inputted from switch 111 including adding a control channel for relay transmission, processing a data channel and forming into a signal format for the base station or the mobile station of the destination of the relay transmission. Relay processing section 112 then outputs the relay signal after the relay processing to switch 113. Here, relay processing section 112 may perform regenerative relay processing or non-regenerative relay processing of the relay signal.

In the same manner as switch 111, switch 113 outputs the relay signal received from relay processing section 112 as input to radio transmitting section 114 or connecting section 108 by switching between the connection with radio transmitting section 114 and the connection with connecting section 108 in accordance with the control signal from relay processing control section 110. To be more specific, when a control signal is received from relay processing control section 110 as input, switch 113 outputs the relay signal inputted from relay processing section 112 to connecting section 108 by connecting with connecting section 108. Meanwhile, when a control signal is not received from relay processing control section 110 as input, switch 113 outputs the relay signal received from relay processing section 112 as input to radio transmitting section 114 by connecting with radio transmitting section 114.

Radio transmitting section 114 performs transmission processing, such as D/A conversion, amplification, up-conversion and so forth, of the relay signal inputted from switch 113 or the signal of mobile station 100 inputted from modulation section 107, and transmits the processed signal from antenna 101.

Next, a configuration of cradle 200 according to the present embodiment is shown in FIG.2.

In cradle 200, when a control signal received from relay processing control section 205 as input, radio receiving section 202 receives a relay signal from another mobile station other than mobile station 100 (FIG.1) or a relay signal from the base station via antenna 201 and performs reception processing, such as down-conversion, A/D conversion and so forth, of the received signal. Radio receiving section 202 then outputs the received signal to connecting section 203.

Connecting section 203 connects cradle 200 and mobile station 100 by connecting with connecting section 108 (FIG.1) of mobile station 100. By this means, cradle 200 transfers the received signal inputted from radio receiving section 202 to mobile station 100 via connecting section 203 and receives the relay signal to which the relay processing has been applied in mobile station 100.

Connection detecting section 204 detects the connection between connecting section 203 and mobile station 100. That is, connection detecting section 204 detects whether or not connecting section 203 is connected with connecting section 108 (FIG.1) of mobile station 100. Then, when detecting connection between cradle 200 and mobile station 100, connection detecting section 204 outputs a signal indicating that connection is detected between cradle 200 and mobile station 100 to relay processing control section 205.

When the signal indicating that connection is detected between cradle 200 and mobile station 100 is received from connection detecting section 204 as input, relay processing control section 205 outputs, to radio receiving section 202, a control signal that commands to perform reception processing, including receiving the relay signal via antenna 201 and transferring the relay signal to mobile station 100. In addition, relay processing control section 205 outputs, to radio transmitting section 206, a control signal that commands to perform transmission processing, including transmitting the relay signal to which the relay processing has been applied in mobile station 100 via antenna 201. To be more specific, relay processing control section 205 controls radio receiving section 202 and radio transmitting section 206 to be turned on.

When a control signal is received from relay processing control section 205 as input, radio transmitting section 206 performs transmission processing, such as D/A conversion, amplification, up-conversion and so forth, of the relay signal inputted from connecting section 203 and transmits the relay signal after the transmission processing via antenna 201. Here, the relay signal inputted to radio transmitting section 206 is a relay signal to which the relay processing has been applied in relay processing section 112 of mobile station 100.

Next, a flow of relay transmission of a relay signal when mobile station 100 and cradle 200 are connected will be described in detail.

When mobile station 100 and cradle 200 are connected, that is, when connecting section 108 (FIG.1) of mobile station 100 and connecting section 203 (FIG.2) of cradle 200 are connected, connection detecting section 109 and connection detecting section 204 each detect this connection. Then, relay processing section 112 of mobile station 100, and radio receiving section 202 and radio transmitting section 206 of cradle 200 are turned on. In addition, switch 111 and switch 113 of mobile station 100 switch connection to connecting section 108. That is, relay processing section 112 of mobile station 100 is connected to radio receiving section 202 and radio transmitting section 206 of cradle 200.

Radio receiving section 202 receives a relay signal from another mobile station other than mobile station 100 or a relay signal from the base station via antenna 201 and performs radio reception processing of the received relay signal.

Then, the relay signal after the radio reception processing is transferred to relay processing section 112 via connecting section 203 connected with connecting section 108.

Next, relay processing section 112 performs relay processing of the relay signal transferred from cradle 200. The relay signal after the relay processing is transmitted to radio transmitting section 206 via connecting section 108 connected with connecting section 203. Radio transmitting section 206 then performs radio transmission processing of the relay signal after the relay processing from mobile station 100, and relays the relay signal after the radio transmission processing to the base station or another mobile station of the destination of the relay transmission, via antenna 201.

Here, it is assumed that cradle 200 is connected to, for example a power supply device, installed in a semifixed state and used. Therefore, for cradle 200, it is not necessary to consider power consumption in comparison with mobile station 100 required to reduce power consumption. That is, although cradle 200 consumes larger power than mobile station 100, cradle 200 can use an antenna, a transmission processing section and a reception processing section having higher performance, that is, cradle 200 can use a receiving amplifier and a transmitting amplifier having higher performance. Therefore, as described above, when mobile station 100 relays a relay signal from another mobile station, the relay performance of mobile station 100 can be improved more by using the transmitting amplifier and the receiving amplifier of cradle 200 than the case where mobile station 100 relays the relay signal independently.

As described above, according to the present embodiment, when a mobile station and a cradle are connected, a relay signal to which the relay processing has been applied in the mobile station can be relayed using the antenna included in the cradle. Therefore, the relay performance of the mobile station can be more improved by using a receiving amplifier and transmitting amplifier having high performance of the cradle than the relay performance of the mobile station independently. To be more specific, when the performance of radio transmitting section 206 (FIG.2) of cradle 200 is higher than the performance of radio transmitting section 114 (FIG.1) of mobile station 100, the relay distance between the mobile station and the radio communication apparatus of the destination of the relay transmission, can be extended. In the same way, when the performance of radio receiving section 202 of cradle 200 is higher than the performance of radio receiving section 102 of mobile station 100, the relay distance between the mobile station and another radio communication apparatus from which the mobile station can receive the relay signal can be extended.

Moreover, according to the present embodiment, when a relay signal is relayed using the antenna included in the cradle, the relay processing section included in the mobile station performs relay processing of the relay signal, so that the mobile station can perform relay transmission independently even if the mobile station and the cradle are not connected. In addition, the cradle does not need to have a relay processing section, so that the circuit scale for relay transmission in the cradle can be minimized. In addition, since the relay processing section of the mobile station is used, the cradle can be used to relay the signal of each mobile station regardless of the radio access scheme. That is, according to the present embodiment, even if the radio access scheme is changed, the cradle can be adapted to that radio access scheme. For example, series-connected signals consisting of a transmitting and receiving synchronizing signal, an input signal, an output signal, a connection signal and so forth, or parallel-connected signals may be used between connecting section 108 (FIG.1) of mobile station 100 and connecting section 203 (FIG.2) of cradle 200.

Here, a case has been described with the present embodiment where connecting section 108 (FIG.1) of mobile station 100 and connecting section 203 (FIG.2) of cradle 200 are wired-connected. However, with the present invention, connecting section 108 of mobile station 100 and connecting section 203 of cradle 200 may be wireless-connected for example, such as UWB (Ultra Wide Band).

### (Embodiment 2)

In embodiment 1, a relay signal is relayed using only the antenna included in the cradle. However, with the present embodiment, relay signals are relayed using both the antenna included in the cradle and the antenna included in the mobile station.

That is, with the present invention, MIMO (Multi-Input Multi-Output) relay processing, including receiving relay signals by a plurality of antennas and transmitting the relay signals by a plurality of antennas, is performed in relaying. In MIMO relay processing, a plurality of individual relay signals (stream) are transmitted and received simultaneously in the same band using a plurality of antennas for each of transmission and reception.

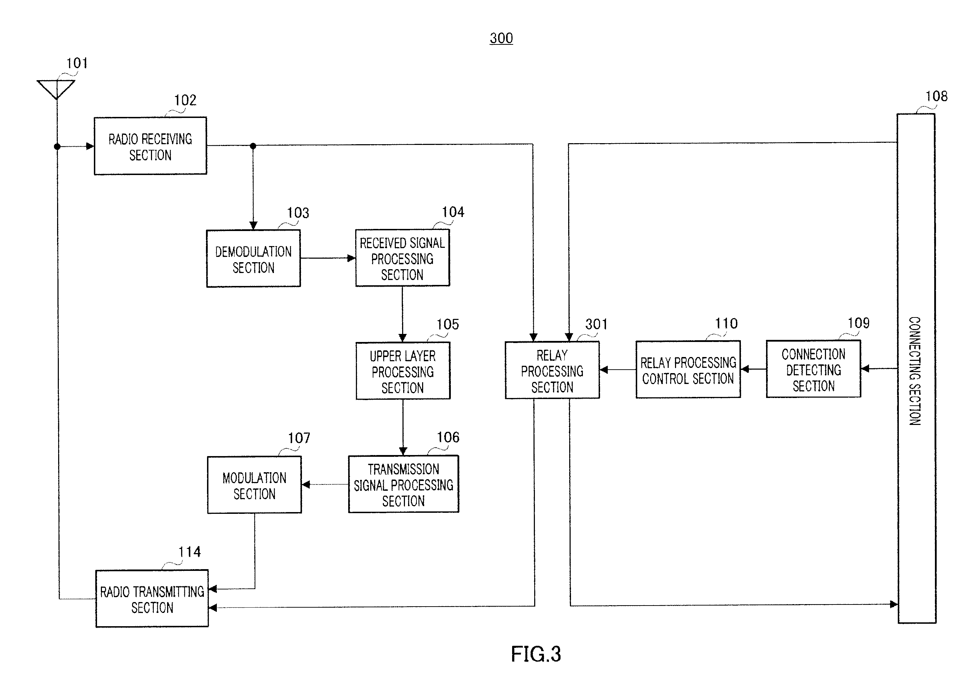

FIG.3 shows a configuration of mobile station 300 according to the present embodiment. Here, the same components as in FIG.1 will be assigned the same reference numerals, and overlapping descriptions will be omitted.

The relay signal from radio receiving section 102 and the relay signal transferred from cradle 200 (FIG.2) via connecting section 108 are inputted to relay processing section 301. Then, relay processing section 301 performs MIMO relay processing of each relay signal. Relay processing section 301 outputs one relay signal after the relay processing to radio transmitting section 114 and outputs the other relay signal to connecting section 108. That is, relay processing section 301 transmits the relay signals to which the relay processing has been applied to both cradle 200 and antenna 101.

Next, a flow of the relay transmission of the relay signals when mobile station 300 and cradle 200 are connected will be described in detail.

When connecting section 108 (FIG.3) of mobile station 300 and connecting section 203 (FIG.2) of cradle 200 are connected, relay processing section 301 of mobile station 300 is connected to radio receiving section 202 and radio transmitting section 206 of cradle 200 as with embodiment 1, and further, relay processing section 301 is connected to radio receiving section 102 and radio transmitting section 114. That is, a 2 x 2 MIMO configuration including two radio receiving sections and two radio transmitting sections is provided by connecting mobile station 300 and cradle 200.

Radio receiving section 202 receives a relay signal from another mobile station other than mobile station 300 or a relay signal from the base station via antenna 201 and performs radio reception processing of that relay signal. In the same way, radio receiving section 102 receives a relay signal from another mobile station or the base station via antenna 101 and performs radio reception processing of that relay signal.

Then, the relay signal to which the radio reception processing has been applied in radio receiving section 202 is transferred to relay processing section 301 via connecting section 203 connected to connecting section 108. In the same way, the relay signal to which the radio reception processing has been applied in radio receiving section 102 is inputted to relay processing section 301.

Next, relay processing section 301 performs MIMO relay processing of the inputted plurality of relay signals. Then, among the plurality of relay signals to which the relay processing has been applied, one relay signal is transmitted to radio transmitting section 206 via connecting section 108 connected to connecting section 203. Meanwhile, among the plurality of relay signals after the relay processing, the other relay signal is transmitted to radio transmitting section 114.

Radio transmitting section 206 then performs radio transmission processing of the relay signal to which the relay processing has been applied in mobile station 300 and relays the relay signal after the radio transmission processing to the base station or another mobile station other than mobile station 100 of the destination of the relay transmission, via antenna 201. In the same way, radio transmitting section 114 performs radio transmission processing of the relay signal and relays the relay signal after the radio transmission processing to the base station or another mobile station of the destination of the relay transmission, via antenna 101.

By this means, when mobile station 300 and cradle 200 are connected, relay signals can be relayed by the MIMO configuration using antenna 101 of mobile station 300 and antenna 201 of cradle 200. That is, when relay signals are relayed, 2 x 2 MIMO relay transmission by a configuration composed of mobile station 300 and cradle 200 is performed. Therefore, a plurality of relay signals can be relayed simultaneously in the same band.

As described above, according to the present embodiment, the relay signals to which the relay processing has been applied in the mobile station are transmitted to both the antenna of the cradle and the antenna of the mobile station. Therefore, MIMO relay transmission of relay signals is allowed, using not only the antenna of the cradle but also the antenna of the mobile station, so that the relay performance of the mobile station can be improved more than that in embodiment 1.

Embodiments of the present invention have been described so far.

Here, although the relay transmission method in a case in which the mobile station is connected to the cradle has been described, the mobile station according to the present embodiment can relay independently relay signals even if the mobile station is not connected to the cradle.

The mobile station may be referred to as "UE" and the base station may be referred to as "Node B."

Also, although cases have been described with the above embodiment as examples where the present invention is configured by hardware, the present invention can also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosure of Japanese Patent Application No.2007-268104, filed on October 15, 2007, including the specification, drawings and abstract, is incorporated herein by reference in its entirety.

### Industrial Applicability

The present invention is applicable to a mobile communication system and so forth.

## Claims

1. A radio communication apparatus, comprising:
a connecting section that performs a connecttion the radio communication apparatus to a cradle apparatus;
a detecting section that detect the connection; and
a relay processing section that performs relay processing of a signal transferred from the cradle apparatus and transmits the processed signal to the cradle apparatus, when the detecting section detects the connection.

2. The radio communication apparatus according to claim 1, further comprising
an antenna, and
wherein the relay processing section transmits the signal, to which the relay processing has been applied, to both the cradle apparatus and the antenna.

3. A cradle apparatus, comprising:
an antenna;
a connecting section that performs a connection the cradle apparatus to a radio communication apparatus;
a detecting section that detects the connection;
a receiving section that receives a signal from another radio communication apparatus other than the radio communication apparatus via the antenna and transfers the received signal to the radio communication apparatus, when the detecting section detects the connection; and
a transmitting section that transmits the signal, to which the relay processing has been applied in the radio communication apparatus, via the antenna when the detecting section detects the connection.

4. A method of relay transmission, comprising;
relaying a signal, to which relay processing has been applied in a radio communication apparatus, using an antenna of a cradle apparatus when the radio communication apparatus is connected to the cradle apparatus.
